# FASCICULE DE BREVET EUROPEEN

(11) **EP 0 369 875 B1**
(45) Date de publication et mention de la délivrance du brevet: **03.03.1993**
(21) Numéro de dépôt: 89403129.3
(22) Date de dépôt: 14.11.1989
(51) Int. Cl.: A22C 29/04

(54) **Procédé et installation d'ouverture de coquillages**
Verfahren und Vorrichtung zum Öffnen von zweischaligen Seetieren
Method and device for opening shell fish

(30) Priorité: 16.11.1988 FR 8814883
(43) Date de publication de la demande: 23.05.1990
(73) Titulaire: ELECTRICITE DE FRANCE Service National, 75008 Paris (FR)
(72) Inventeur: Delplanque, Pascal, F-56000 Vannes (FR)
(74) Mandataire: Mongrédien, André

(56) Documents cités:
- FR-A- 2 030 756
- US-A- 3 070 834
- US-A- 3 585 676
- US-A- 3 755 855
- US-A- 4 236 276
- US-A- 4 420 492
- US-A- 4 691 412
- TRANSACTIONS OF THE AMERICAN SOCIETY OF AGRICULTURAL ENGINEERS. vol. 17, no. 2, 1974, SAINT JOSEPH, MICH U pages 342 - 345; wheaton: "oyster shucking with infrared radiation"

## Description

Le domaine de l'invention est l'ouverture automatique et continue des coquillages, et en particulier dans le cadre d'une installation industrielle assurant le dessablage, le lavage, le traitement, la préparation et le conditionnement des coquillages en grande série.

Le terme "coquillage" est utilisé tout au long de la description et des revendications.

Dans le cadre de la présente invention, il désigne en fait les mollusques bivalves.

Les problèmes considérés relativement à la présente invention sont, non seulement l'ouverture de la coquille du mollusque, mais également le détachement de la chair des valves supérieure et inférieure, tout en conservant la coquille intacte, cette dernière faisant partie du produit commercialisé. Le blanchiment de la chair, la bonne conservation de la qualité du coquillage au cours de son stockage en conserve ou en surgélation et le bon rendement de l'opération au niveau du poids de la chair sont également concernés par la présente invention.

A l'heure actuelle, l'ensemble des opérations d'ouverture, de détachement de la chair et de blanchiment, est réalisé en plongeant les coquillages dans l'eau bouillante pendant un temps moyen de quelques minutes, quatre minutes environ. On utilise également l'injection de vapeur au moyen d'un autoclave. Ces techniques nécessitent de nombreuses contraintes qui sont principalement le traitement en discontinu des coquillages, une forte manutention des produits, une importante consommation d'énergie, et un temps d'ouverture long et difficilement maîtrisable. En effet, la taille des coquilles étant variable, certains coquillages nécessitent un ébouillantage durant 2 minutes, d'autres durant 6 minutes. On constate donc, qu'en appliquant un temps moyen, 25 % des coquilles s'ouvrent et se détachent entièrement, 50 % s'ouvrent, mais restent attachées soit à la valve supérieure, soit à la valve inférieure, et enfin 25 % ne sont pas ouvertes. A l'échelle industrielle, il est donc nécessaire de faire appel à du personnel supplémentaire.

D'autre part, de nombreux inconvénients apparaissent, tels que des mauvaises conditions de travail, comme les buées, chaleur, manutention de produits bouillants. Enfin, une dégradation potentielle des qualités gustatives et d'aspect des produits apparaît, causée par une éventuelle cuisson excessive, ou par l'effet du trempage, qui de plus entraîne le fait que la qualité bactériologique des coquillages ainsi traitée devient aléatoire. Un autre procédé connu de l'art antérieur, décrit dans le document US-A-3 755 855, fait emploi du rayonnement infrarouge.

Le but de l'invention est de remédier à ces inconvénients, et de pouvoir fournir une installation capable de s'intégrer dans une chaîne de préparation et de conditionnement de coquillages au niveau industriel.

A cet effet, le premier objet principal de l'invention est un procédé d'ouverture des coquillages. Celui-ci consiste à soumettre les coquillages à des rayonnements infrarouges de longueur d'onde comprise entre 0,75 et 2 micromètres, et comportant les trois phases successives suivantes :
(a) exposition des coquillages à des rayonnements supérieurs sur une première moitié de leur surface externe ;
(b) exposition des coquillages à des rayonnements supérieurs et inférieurs sur toute la surface externe des coquillages ; et
(c) exposition des coquillages aux seuls rayonnements inférieurs sur la seconde moitié de leur surface externe.

Les trois phases ont, de préférence, des durées égales.

Le procédé est particulièrement efficace lorsque la puissance surfacique est comprise entre 30 et 70 kW/m².

Un autre objet principal de l'invention est une installation d'ouverture de coquillages, utilisant le procédé tel qu'il vient d'être résumé. Elle comprend principalement un convoyeur comportant une partie de convoyage, sur laquelle sont placés les coquillages, des émetteurs supérieurs de rayonnements placés au-dessus et à la verticale de la partie de convoyage, sur deux premières zones correspondant aux deux premières phases, et orientés de manière à diriger leur rayonnement sur cette partie de convoyage, et des émetteurs latéraux de rayonnements placés en dehors de la projection verticale de la partie supérieure de convoyage, sur deux dernières zones correspondant aux deux dernières phases, et orientés de manière à diriger leurs rayonnements vers la partie de convoyage.

De façon préférentielle, les émetteurs inférieurs sont installés des deux côtés du convoyeur. De plus, ils sont installés pour orienter de façon parallèle les uns par rapport aux autres leurs rayonnements, et sont du type à réflecteur parabolique, de manière à émettre des rayonnements parallèles.

Le convoyeur est de préférence terminé par un réceptable, destiné à recevoir les coquillages ouverts.

Deux formes sont possibles pour constituer les émetteurs. La première est elliptique et convient particulièrement bien aux émetteurs supérieurs, la deuxième est parabolique et convient mieux aux émetteurs inférieurs.

L'invention est destinée à être intégrée dans une installation industrielle de lavage, de dessablage, de préparation et de conditionnement des coquillages.

L'invention, ainsi que toutes ses caractéristiques techniques seront mieux comprises à la lecture de la description suivante, annexée des figures représentant respectivement :
- figure 1, une vue de profil de l'installation, selon l'invention ;
- figure 2, une coupe verticale de la même installation, selon l'invention ;
- figure 3, une vue de dessus de la même installation selon l'invention ;
- figure 4, une première réalisation des émetteurs de rayonnements utilisés dans l'invention ;
- figure 5, une deuxième réalisation des émetteurs de rayonnements utilisés dans l'invention ;
- figure 6, une installation industrielle relative à la préparation et au conditionnement des coquillages, dans laquelle est intégrée l'invention.

Le concept inventif de l'invention est le procédé et la mise en oeuvre d'un procédé d'ouverture de différentes sortes de coquillages du type mollusque bivalve au moyen de rayonnements infrarouges. Ils sont particulièrement efficaces dans le cas, où leur longueur d'onde est comprise entre 0,75 et 2 micromètres.

En effet, de nombreux essais ont été effectués avec différents types de coquillages, tels que des pétoncles, des moules, des praires, des palourdes. Certains de ces coquillages ont été testés sous leur forme fraîche et sous leur forme congelée.

Le procédé est efficace, selon les produits, lorsque les rayonnements sont appliqués pendant une durée comprise entre 30 secondes et plusieurs minutes, généralement 3 minutes.

Le procédé peut être effectué sans interruption, lorsque l'on utilise un convoyeur sans fin permettant le travail en continu. Un convoyeur à mailles métalliques, par exemple inoxydables, permet de mettre en oeuvre le procédé selon l'invention.

Il est particulièrement efficace lorsqu'il comprend les trois phases suivantes.

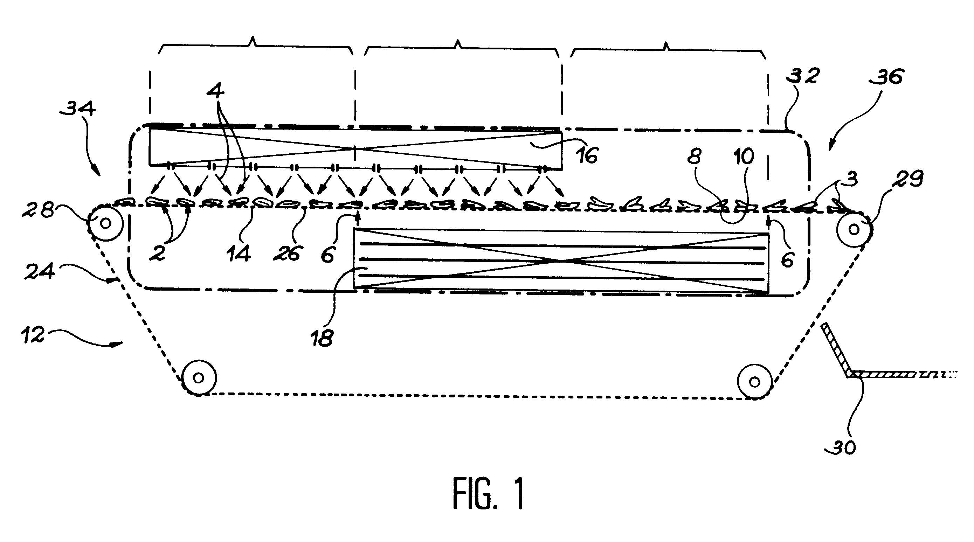

La première consiste à exposer les coquillages, repérés 2 sur les figures 1, 2 et 3, à des rayonnements supérieurs 4, par l'intermédiaire d'une première moitié supérieure de leur surface externe. Les coquillages 2 étant au préalable fermés, les rayonnements infrarouges supérieurs 4 ainsi émis agissent sur cette partie supérieure de la coquille, puis au bout d'un certain temps, sur la chair des organes qui sont en contact avec la coquille. Ces organes sont le ligament élastique qui relie les deux parties de la coquille et le muscle adducteur qui provoque la fermeture de la coquille, et en maintient serrées les deux parties. Une fois que ces organes subissent la chaleur transmise par la partie supérieure de la coquille, ils se détachent de la partie supérieure de la coquille ou se détendent et la coquille commence à s'ouvrir. L'eau contenue dans le coquillage s'en échappe alors, et la chaleur transmise au préalable par conduction de l'eau par la partie supérieure n'est plus transmise correctement au reste du coquillage. C'est pourquoi le procédé selon l'invention prévoit une deuxième phase pendant laquelle le coquillage est soumis à la fois aux rayonnements infrarouges supérieurs 4 et à des rayonnements infrarouges inférieurs 6, pour chauffer les coquillages par en dessous. Une fois que ce chauffage par la partie supérieure de la coquille n'est plus efficace, on cesse l'action des rayonnements supérieurs 4. Les durées respectives de trois phases sont déterminées en fonction des caractéristiques propres des produits, mais ces trois phases ont de préférence une même durée déterminée T.

De nombreux critères mécaniques, de dimensionnement et de condition de mise en oeuvre du procédé influent sur l'efficacité de celui-ci. Toutefois, la puissance surfacique des rayonnements à appliquer aux coquillages est comprise entre 30 et 70 kW/m², pour obtenir le résultat optimal. Cette puissance dépend du type de coquillage, de sa grosseur et de son état, frais ou congelé. La durée du traitement dépend également du coquillage. Il y a donc un couple optimal puissance-temps.

Dans le cas où un convoyeur est utilisé, la puissance des émetteurs est fonction de la surface du convoyeur et de sa vitesse de déplacement, et par conséquent du débit de produit à traiter.

Il est bien entendu que de nombreux réglages peuvent être appliqués, lors de la mise en oeuvre de ce procédé, compte tenu de celle-ci et des types de coquillages à ouvrir. En particulier, une mise en oeuvre appliquée à un seul type de produit pourra faire l'objet de réglages très précis, particulièrement bien adapté à ce type de coquillages. En particulier la vitesse de défilement du convoyeur est réglable pour pouvoir appliquer le couple puissance-temps adapté aux coquillages à traiter.

Le procédé selon l'invention permet donc une ouverture en continue de ces coquillages, une manutention minimale et une possibilité de contrôle visuel du taux de cuisson des fruits et du temps d'ouverture des coquillages. Il évite en outre le trempage pendant l'ouverture, il s'ensuit une bonne conservation des qualités organoleptiques et bactériologiques. Il évite également le dégagement de buée et de chaleur excessive. On note également un rendement énergétique supérieur d'environ 50 %, par rapport au système de l'art antérieur.

L'installation pour ouvrir les coquillages selon l'invention est représentée de profil sur la figure 1. Les éléments principaux de cette installation sont un convoyeur 12 et des émetteurs de rayonnements 16 et 18.

Le convoyeur 12 est constitué de rouleaux de renvoi 28, 29, dont au moins l'un deux est entraîné en rotation par des moyens moteurs non représentés. Autour et entre ces rouleaux de renvoi 28, 29, est placée, de manière tendue, une chaîne de convoyage 24. Entre deux rouleaux de renvoi supérieurs 28 et 29, se trouve une partie de convoyage 14, partie sur laquelle se trouvent les coquillages à ouvrir. Ces derniers peuvent être posés sur une première extrémité amont 34 de cette partie de convoyage 14, par n'importe quel moyen de manutention. La rotation des rouleaux de renvoi 28, 29 entraînant une translation de la chaîne de convoyage 24, les coquillages 2 posés sur cette chaîne de convoyage 24 se trouvent acheminés à la deuxième extrémité aval 36 de la partie de convoyage 14. La chaîne de convoyage 24 étant acheminée, par un parcours inférieur, à la première extrémité 34 de la partie de convoyage 14, les coquillages ouverts 3 peuvent être amassés dans un réceptacle 30 se trouvant en-dessous de cette deuxième extrémité 36 de la partie de convoyage 14.

Compte tenu de la disposition périphérique des émetteurs de rayonnements 4 et 6 et de la nature des rayonnements émis, la chaîne de convoyage 24 est en un matériau transparent aux rayonnements infrarouges, pour que ces derniers puissent atteindre les coquillages 2. Ce matériau doit également pouvoir laisser s'échapper un liquide, tel que l'eau, pour que les coquillages 2 puissent être égouttés de l'eau qu'ils rendent pendant ce processus d'ouverture. Dans ce but, la chaîne est constituée de préférence de mailles métalliques 26 et plus précisément en acier inoxydable. Les mailles métalliques 26 permettent donc aux rayonnements d'atteindre tous les endroits de la surface externe des coquillages à ouvrir.

Sur ces trois premières figures, sont représentés plusieurs émetteurs supérieurs 16, disposés côte à côte, au-dessus et à la verticale des deux premiers tiers de la partie de convoyage 14, sur une distance déterminée correspondant aux deux premières phases du procédé. Ils sont espacés de manière à ce que, s'ils sont divergents, les rayonnements émis par des émetteurs supérieurs 1 adjacents se chevauchent au niveau des coquillages 2 posés sur la bande de convoyage 24. Cette disposition est donc valable dans le cas d'utilisation d'émetteurs de rayonnements de type elliptique émettant des rayonnements divergents 4.

Les émetteurs inférieurs 18 sont disposés à côtés du convoyeur 12, en-dessous du plan P, où se trouvent posés les coquillages 2 et, de manière plus précise, en dehors de la projection verticale de la partie de convoyage 14, de manière à éviter l'eau issue de l'égouttement des coquillages. Ils sont orientés de manière à diriger leur rayonnement 6 en-dessous de la chaîne de convoyage 24, dans la partie de convoyage 14. La chaîne de convoyage 24 étant constituée d'un matériau transparent aux rayonnements infrarouges, les rayonnements 6 des émetteurs inférieurs 18 traversent cette chaîne et frappent chaque coquillage 2 sur la partie inférieure externe de la coquille.

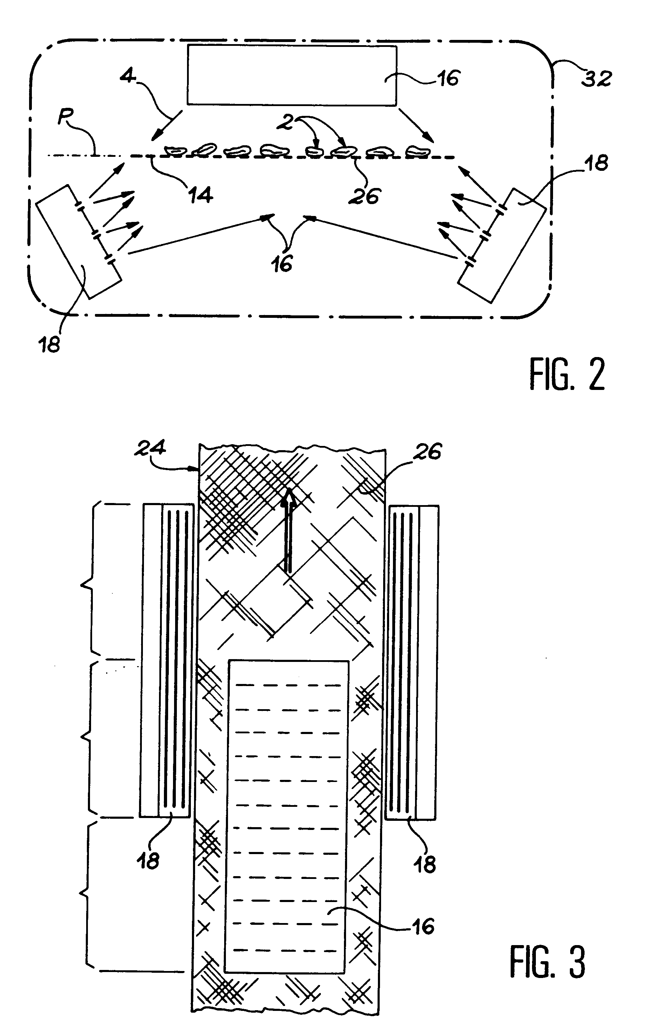

En référence à la figure 2, les émetteurs inférieurs 18 émettent des rayonnements 6 parallèles et adjacents de façon à couvrir la totalité de la surface inférieure de la chaîne de convoyage 24 au niveau de la partie de convoyage 14. Une disposition particulièrement efficace est que ces émetteurs inférieurs 18 sont orientés d'un angle de 30° par rapport au plan P horizontal.

Les moyens moteurs d'entraînement de la chaîne de convoyage 24 n'ont pas été représentés. Ils peuvent être constitués, soit d'un moteur électrique avec variateur de vitesse, soit d'un moteur électrique pas-à-pas, les pas correspondant aux trois phases du procédé et aux trois zones de travail.

Sur la figure 2, on a représenté en traits mixtes la section d'un tunnel 32 qui constitue un carénage thermique de la partie de convoyage, pour éviter les déperditions de chaleur. Etant ouvert à chaque extrémité, il permet en outre à un observateur de surveiller les opérations.

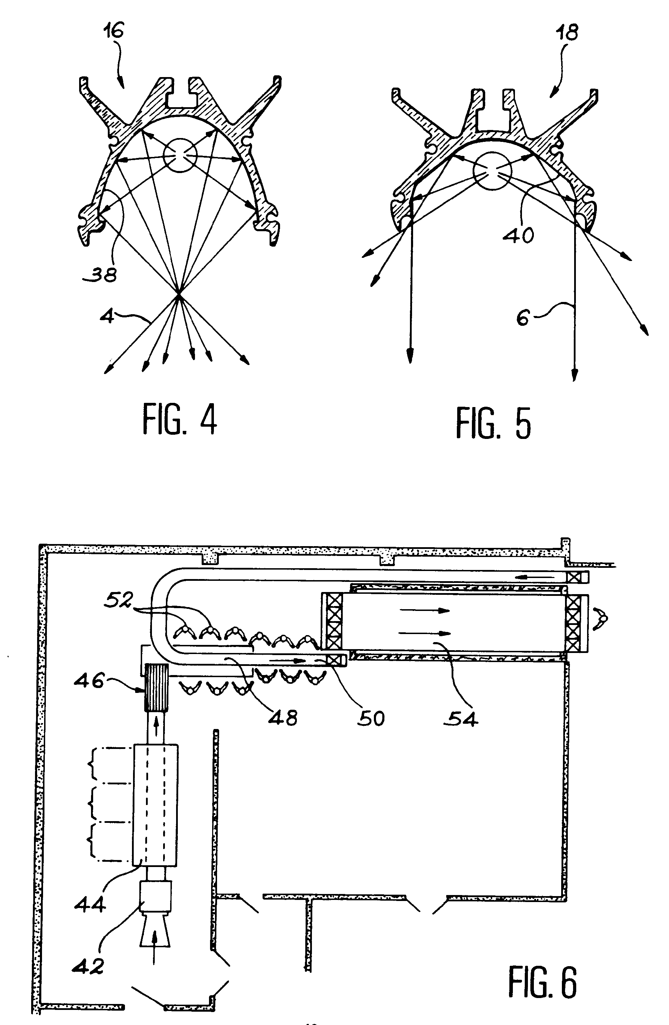

La figure 4 montre une réalisation d'émetteurs dont la surface interne réflectrice 38 a une forme elliptique. Une telle forme produit un faisceau d'abord convergent, puis divergent. La réalisation principale de l'invention prévoit d'utiliser ce type d'émetteurs comme émetteurs supérieurs.

La figure 5 montre une deuxième réalisation d'un émetteur utilisé dans l'invention, et pour laquelle la forme de la surface interne réflectrice 40 a une forme parabolique. Une telle disposition permet à un émetteur de fournir un faisceau dont la plupart des rayonnements sont parallèles. Un tel type d'émetteurs est utilisé plus spécialement pour constituer les émetteurs latéraux.

Les surfaces internes réflectrices 38 et 40 peuvent être soit en aluminium brillanté, soit être équipées d'une tôle réfléchissante dorée.

Le rayonnement infrarouge est généré par un tube quartz à filament de tungstène sous vide, filament qui est porté à une température de 2 200°C. A cette température, la longueur d'onde du rayonnement est comprise entre 0,75 et 2 micromètres. L'air nécessaire au refroidissement des extrémités des tubes quartz est fourni par une demi-cassette de ventilation. Il permet également d'éviter les remontées de vapeurs nocives vers l'émetteur.

En considérant la figure 6, l'installation d'ouverture de coquillages selon l'invention est destinée à être intégrée dans une installation industrielle produisant des fruits de mer conditionnés et destinés à être commercialisés.

L'installation d'ouverture 44 de coquillages selon l'invention, peut être placée dans une chaîne de préparation des coquillages, juste après une machine de lavage et de dessablage par jet 42 des coquillages. Ces derniers étant ouverts, un nouveau lavage est nécessaire. Dans ce but, la sortie de l'installation d'ouverture 44 de coquillages est directement suivie d'une machine 46 comportant un cylindre de lavage et de séparation des fruits par rapport aux coquilles, l'opération ayant lieu dans un bac de saumure. La sortie de cette dernière machine 46 aboutit au début une zone de reconstitution des coquillages 48 suivie d'une zone de beurrage par pistolet 50, où un certain personnel 52 est nécessaire. Cette zone de reconstitution et de beurrage est suivie d'un tunnel de surgélation 54 à l'issu duquel les produits surgelés sont conditionnés et près au transport et à la commercialisation.

On constate donc que l'installation d'ouverture des coquillages selon l'invention permet de s'intégrer dans une installation industrielle fonctionnant en continu. Le poste d'ouverture des coquillages ne nécessite plus de personnel et réclame une manutention minimale. Il permet l'installation d'appareils de contrôle du temps d'ouverture des coquillages et du taux de cuisson des fruits. Le trempage dans une eau en ébullition pendant l'ouverture est donc évité, cette particularité facilitant une bonne conservation des qualités bactériologiques des produits ainsi que de leurs qualités organoleptiques.

Enfin l'installation selon l'invention évite la présence de buée ou de chaleur excessive présente dans les installations selon l'art antérieur.

## Revendications

1. Procédé d'ouverture de coquillages (2) consistant à soumettre les coquillages (2) à des rayonnements infrarouges (4, 6), caractérisé en ce que les rayonnements infrarouges (4, 6) ont une longueur d'onde comprise entre 0,75 et 2 micromètres, et en ce qu'il comporte les trois phases successives suivantes :
(a) exposition des coquillages (2) à des rayonnements supérieurs (4) sur une première moitié (8) de leur surface externe ;
(b) exposition des coquillages (2) à des rayonnements supérieurs (4) et inférieurs (6) sur toute la surface externe (8, 10) des coquillages (2) ; et
(c) exposition des coquillages (2) aux seuls rayonnements inférieurs (6) sur la seconde moitié de leur surface externe.

2. Procédé selon la revendication 1, caractérisé en ce que les trois phases ont des durées égales.

3. Procédé selon l'une quelconque des revendications 1 ou 2, caractérisé en ce que la puissance surfacique des rayonnements est comprise entre 30 et 70 kW/m².

4. Installation d'ouverture de coquillages selon le procédé de l'une des revendications précédentes, caractérisée en ce qu'elle comporte :
- un convoyeur (12) perméable aux rayonnements infrarouges (4, 6) et aux liquides, comportant une partie de convoyage (14) sur laquelle sont placés les coquillages (2) ;
- des émetteurs supérieurs de rayonnements infrarouges (16) placés au-dessus et à la verticale de la partie de convoyage (14), sur deux premières zones correspondant aux deux premières phases, et orientés de manière à diriger leur rayonnement (4) sur la partie de convoyage (14) ; et
- des émetteurs inférieurs de rayonnements infrarouges (18) placés en dehors de la projection verticale de la partie de convoyage (14), sur deux dernières zones correspondant aux deux dernières phases, et orientés de manière à diriger leur rayonnement (6) vers la face inférieure de la partie de convoyage (14).

5. Installation selon la revendication 4, caractérisée en ce que les émetteurs inférieurs (18) sont installés des deux côtés du convoyeur (12).

6. Installation selon l'une quelconque des revendications 4 ou 5, caractérisé en ce que les émetteurs inférieurs (18) sont installés pour orienter de façon parallèle les uns par rapport aux autres leurs rayonnements (6), et en ce qu'ils sont du type à réflecteur parabolique (38), de manière à émettre des rayonnements parallèles (6).

7. Installation selon l'une quelconque des revendications 4 à 6, caractérisée en ce que les émetteurs supérieurs (16) sont du type à réflecteur elliptique (40) de manière à émettre des rayonnements (6) divergents.

8. Installation selon l'une quelconque des revendications 4 à 7, caractérisée en ce qu'elle comprend un réceptacle (30) placé après le convoyeur (12) pour recevoir les coquillages ouverts (3).

9. Installation selon l'une quelconque des revendications 4 à 8, caractérisée en ce que le convoyeur (12) comporte une chaîne sans fin (24) perméable aux rayonnements infrarouges et aux liquides et installée de manière à constituer la partie de convoyage (14).

10. Installation selon l'une quelconque des revendications 4 à 9, utilisée dans une installation industrielle de lavage, de dessablage, de préparation et de conditionnement de coquillages (2).

## Patentansprüche

1. Verfahren zum Öffnen von Muscheln (2) durch Bestrahlung der Muscheln mit Infrarotstrahlen (4, 6), dadurch gekennzeichnet, daß die Infrarotstrahlen (4, 6) eine Wellenlänge zwischen 0,75 und 2 Mikrometer haben und daß das Verfahren die drei folgenden aufeinanderfolgenden Stufen umfaßt :
(a) Bestrahlung der Muscheln (2) von oben (4) auf der ersten Hälfte (8) ihrer Außenoberfläche;
(b) Bestrahlung der Muscheln (2) von oben (4) und von unten (6) auf der gesamten Außenoberfläche (8, 10) der Muscheln (2) und
(c) Bestrahlung der Muscheln (2) nur von unten (6) auf der zweiten Hälfte ihrer Außenoberfläche.

2. Verfahren nach Anspruch 1, dadurch gekennzeichnet, daß die drei Stufen von gleicher Dauer sind.

3. Verfahren nach einem der Ansprüche 1 bis 2, dadurch gekennzeichnet, daß die flächenbezogene Leistung der Strahlen zwischen 30 und 70 kW/m² liegt.

4. Anlage zum Öffnen von Muscheln nach dem Verfahren nach einen der obengennanten Ansprüche, dadurch gekennzeichnet, daß sie folgendes umfaßt :
- eine für Infrarotstrahlen (4, 6) und Flüssigkeiten durchlässige Transportvorrichtung (12), die einen Transportierteil enthält (14), auf dem die Muscheln (2) liegen;
- obere Infrarotstrahler (16), die oberhalb und in der Senkrechten des Transportierteils (14) an zwei ersten Abschnitten, die den beiden ersten Stufen entsprechen, angebracht sind und so ausgerichtet sind, daß ihre Strahlen (4) auf den Transportierteil (14) treffen, und
- untere Infrarotstrahler (18), die außerhalb der senkrechten Projektion des Transportierteils (14) auf den beiden letzten Abschnitten, die den beiden letzten Stufen entsprechen, angebracht sind und zwar so, daß ihre Strahlen (6) auf die Unterseite des Transportierteils (14) gerichtet sind.

5. Anlage nach Anspruch 4, dadurch gekennzeichnet, daß die unteren Strahler (18) an beiden Seiten der Transporteinrichtung (12) angebracht sind.

6. Anlage nach einem der Ansprüche 4 bis 5, dadurch gekennzeichnet, daß die unteren Strahler (18) so angebracht sind, daß die Bestrahlungen (6) parallel zueinander erfolgen und daß es sich bei ihnen um Parabolreklektoren (38) handelt, sodaß sie Parallelstrahlen (6) abgeben.

7. Anlage nach einem der Ansprüche 4 bis 6, dadurch gekennzeichnet, daß es sich bei den oberen Strahlern (16) um elliptische Strahler (40) handelt, sodaß diese divergierende Strahlen (6) abgeben.

8. Anlage nach einem der Ansprüche 4 bis 7, dadurch gekennzeichnet, daß sie eine Auffangvorrichtung (30) besitzt, die nach der Transportvorrichtung (12) kommt und die geöffneten Muscheln (3) in Empfang nimmt.

9. Anlage nach einem der Ansprüche 4 bis 8, dadurch gekennzeichnet, daß die Transporteinrichtung (12) ein Endlosband (24) umfaßt, das für Infrarotstrahlen und Flüssigkeiten durchlässig ist und so angebracht ist, daß es den Transportierteil (14) bildet.

10. Anlage nach einem der Ansprüche 4 bis 9, die in einer Industrieanlage zum Säubern, Entsanden, zur Zubereitung und Verpackung von Muscheln (2) eingesetzt wird.

## Claims

1. Process for opening shellfish (2) consisting of subjecting the latter to infrared radiation (4,6) with a wavelength between 0.75 and 2 micrometres and involving the following three successive phases:
(a) exposure of the shellfish (2) to radiation from above (4) over a first half (8) of their outer surface,
(b) exposure of the shellfish (2) to radiation from above (4) and below (6) over the entire outer surface (8,10) of the shellfish (2) and
(c) exposure of the shellfish (2) to radiation from below (6) only over the second half of their outer surface.

2. Process according to claim 1, characterized in that the three phases last the same amount of time.

3. Process according to either the claim 1 or 2, characterized in that the power per unit area of the radiation is between 30 and 70 kW/m².

4. Installation for opening shellfish according to the process of one of the preceding claims, characterized in that it comprises a conveyor (12) permeable to infrared radiation (4,6) and to liquids, which has a conveying part (14) on which are placed the shellfish (2), upper infrared radiation emitters (16) placed above and vertically of the conveying part (14) on two first zones corresponding to the first two phass and oriented so as to direct their radiation (4) onto conveying part (14) and lower infrared radiation emitters (18) placed outside the vertical projection of the conveying part (14) on two latter zones corresponding to the two last phases and oriented to direct their radiation (6) towards the lower face of conveying part (14).

5. Installation according to claim 4, characterized in that the lower emitters (18) are installed on both sides of the conveyor (12).

6. Installation according to either the claims 4 or 5, characterized in that the lower emitters (18) are installed so as to partly reciprocally orient in parallel the radiations (6) thereof and in that they are of the parabolic reflector type (38), so as to emit parallal rays (6).

7. Installation according to any one of the claims 4 to 6, characterized in that the upper emitter (16) are of the elliptical reflector (40) type, so as to emit divergent rays (6).

8. Installation according to any one of the claims 4 to 7, characterized in that it comprises a receptacle (30) placed following the conveyor (12) in order to receive the open shellfish (3).

9. Installation according to any one of the claims 4 to 8, characterized in that the conveyor (12) incorporates an endless chain (24) permeable to the infrared radiation and to liquids and installed so as to constitute the conveying part (14).

10. Installation according to any one of the claims 4 to 9, used in an industrial installation for the washing, sand removal, preparation and conditioning of shellfish (2).
